# EUROPEAN PATENT APPLICATION

(11) **EP 4 446 496 A1**
(43) Date of publication of application: **16.10.2024**
(21) Application number: 22903202.4
(22) Date of filing: 23.11.2022
(51) Int. Cl.: D06M 11/71, D06M 11/47, D01F 6/92, D01F 1/07, A41D 19/015

(54) **PROTECTIVE GLOVE FOR ELECTRIC WELDING, AND MANUFACTURING METHOD THEREFOR**

(30) Priority: 09.12.2021 CN 202111503233
(71) Applicant: Nantong Qiangsheng New Material Technology Co., Ltd, Jiangsu 226000 (CN)
(72) Inventor: SHA, Yan, Nantong, Jiangsu 226000 (CN); SHA, Xiaolin, Nantong, Jiangsu 226000 (CN); MA, Liguo, Nantong, Jiangsu 226000 (CN)
(74) Representative: Longoni, Alessandra
(86) International application number: PCT/CN2022/133732
(87) International publication number: WO 2023/103779

(57) **Abstract**

This invention discloses an electro-welding protective glove and its preparation method. The method comprises: S1, selecting raw materials; S2, preparing a refined terephthalic acid/graphene oxide/ethylene glycol modified slurry; S3, esterification reaction; S4, condensation reaction; S5, heating and melting the modified graphene oxide flame-retardant polyester masterbatch, then spinning it into a bundle; S6, weaving the obtained graphene oxide flame-retardant polyester filament into a woven fabric; S7, preparing a flame-retardant agent finishing solution, immersing the fabric into the finishing solution, then drying it; S8, according to the glove template, cutting and sewing the obtained fabric. This invention also provides an electro-welding protective glove prepared by the method. The method provided by this invention is simple and suitable for electro-welding and other fields, and can effectively protect human safety.

## Description

### Technical Field

The invention relates to a functional glove and a preparation method , in particular to a protective glove for electric welding and a preparation method.

### Background Art

Hands are one of the most delicate and dense organs in the human body, and people use their hands to complete various tasks. Gloves are hand warm or labor protection supplies, but also decorative. It is an essential thing for people to keep warm when they are cold, or as an essential medical bacteria prevention and industrial protection supplies. Gloves according to the production method can be divided into sewing, knitting, dipping and so on. With the improvement of various functional requirements for gloves, relevant technologies in the direction of glove material and preparation process are also constantly developing. In particular, the material of gloves determines the protective performance of gloves, which is the basis for glove selection.

Graphene is a two-dimensional material with carbon atoms arranged hexagonally. Graphene oxide has carboxyl group, epoxy group, hydroxyl group and other groups modified on the surface of graphene. Due to the simple preparation process of graphene oxide, the low cost of raw materials, and the fact that graphene oxide is more difficult to aggregate than graphene in actual operation, it can be widely used in large-scale industrial production.

Graphene is also a two-dimensional carbon material with excellent barrier properties, and its introduction into polymer materials can reduce the heat release of combustible gases during combustion. Graphene and flame retardants form a double barrier effect that greatly reduces the rate at which volatiles are released from resin decomposition and minimizes and transfers the combustion heat released.

In addition, it has been reported in the literature that when the graphene layer is charred, it forms a continuous carbon layer, which is dense and continuous, and it blocks the surface, preventing oxygen from entering the deep part of the material. Graphene conducts heat very well, which means that localized heat is conducted into the rest of the material and dispersed, making it difficult for a fire to spread. Heat conduction and coke blocking create a so-called maze effect, in which heat and combustion gases must follow a zigzag path to the fuel, and this effectively prevents the spread of the flame. In addition to the flame retardant effect, graphene and graphene oxide also have a very high surface area. This adsorbs flammable organic volatiles and prevents their release and diffusion during combustion. Graphene is likely to reduce toxic gases in fires.

Polyester fiber is a kind of chemical fiber with low cost, good performance and wide use, but traditional polyester fiber is not functional. With the development of society, traditional polyester has been unable to meet people's needs for functional textiles, such as the use of polyester gloves, it is not suitable for electric welding and other environments, can not provide adequate protection for operators.

### Summary of the invention

The invention aims to provide a functional glove and a preparation method thereof, which can solve existing problems. The preparation method of the glove is simple, suitable for electric welding and other fields, and can effectively protect human body safety.

In order to achieve the above purpose, the invention provides a preparation method of protective gloves for electric welding, the method comprises: step 1, selecting raw materials; Step 2: Prepare refined terephthalic acid/graphene oxide/ethylene glycol modified paste; Step 3, esterification reaction: Add the slurry obtained in step 2 to the reactor, fill and discharge nitrogen repeatedly, exhaust the air in the reactor, and finally heat up after filling nitrogen to carry out pressurized esterification reaction; Step 4, polycondensation reaction: continue to increase the temperature in the kettle, carry out low vacuum polycondensation, reduce the pressure in the kettle, and at the same time increase the temperature. After the reaction, let it stand, then open the casting head, fill the nitrogen into the polymer melt to form a stable trickle, cool it by the sink, cut the grain by the granulator, and dry it with air blast, and save it for later use. Step 5, melt spinning: the modified graphene flame retardant polyester masterbatch obtained in step 4 is dried, then heated and melted, filtered through the spinning box and spun into bundles; Step 6, prepare the fabric: by weaving, the graphene flame retardant polyester filament obtained in step 5 is woven into woven fabric; Step 7, post-treatment of the fabric: prepare a flame retardant finishing liquid, stir and heat up, and then immerse the fabric in the finishing liquid, and then through the dip roller, extruding to remove the excess finishing liquid, and then use the dryer to dry, to obtain high flame retardant fabric; Step 8, according to the glove template, the fabric obtained in step 7 is cut and stitched to make protective gloves for electric welding. Preferably, the raw materials in step 1, by mass percentage, consist of refined terephthalic acid 58%-85%, ethylene glycol 10%-40%, graphene oxide 0.1%~10%, flame retardant 0.1 %~10%, modifier 0.1%∼1%.

Preferably, the graphene oxide is prepared by any of the methods of mechanical stripping, chemical vapor deposition and REDOX method; The flame retardant is prepared by using diammonium hydrogen phosphate, antimony titanium complex and antimony trioxide evenly mixed according to mass ratio 1: (1-2) : (2-3); The modifier is made of polyvinyl alcohol, polyethylene glycol and silane coupling agent uniformly mixed according to mass ratio 1: (2-3) : (3-4).

Preferably, in the step 2, ethylene glycol is slowly added to graphene oxide and flame retardant, while the modifier and refined terephthalic acid are added to the slurry, and the temperature is raised to 70 ~ 85°C after mixing evenly, and the modified dispersion solution is obtained after treatment for 30 ~ 50min. The molar ratio of refined terephthalic acid to ethylene glycol is 1:1 to 4.

Preferably, in the step 3, the obtained slurry is added to the polymerization reactor, repeated filling and discharging nitrogen for several times, exhaust the air in the reactor, and then filling nitrogen to the internal pressure of the reactor is 0.1 ~ 0.5 MPa, and then slowly heating up to the temperature of 230-260°Crange, pressurized esterification reaction is carried out.

Preferably, in the step 4, the temperature in the kettle is continued to rise to 225 ∼ 265°C, low vacuum condensation is carried out, the pressure in the kettle is slowly reduced from normal pressure to 100 ~ 500 Pa, while the temperature is slowly increased to 270 ~ 290 °C, and the reaction time is controlled to 60 ~ 90 min. Then let it stand for 15 to 30 minutes and open the casting head.

Preferably, in the step 5, the obtained modified graphene flame retardant polyester masterbatch is dried, the drying temperature is controlled within the range of 80-200 °C, and the water content of the masterbatch is less than 100 ppm after drying; Then the mixture is added to the screw extruder to heat and melt, and then spun into a bundle after filtering through the spinning box. The spinning temperature is 270-290 °C, and the spinning speed is 500-1500 m/min. The modified graphene anti-cutting polyester fiber was obtained.

Preferably, in the step 6, the gram weight of the woven fabric obtained is 100-500 g / m2.

Preferably, in the step 7, the preparation of flame retardant finishing liquid is by selecting the same flame retardant component in addition, evenly dispersed in distilled water, and then fully stirred, heating to 50-80 °C, the mass concentration of flame retardant in the finishing liquid is 10-30%; Then the fabric is immersed in the finishing liquid, fully impregnated through the dipping roller, extruded to remove the excess finishing liquid, and then dried by the dryer, the drying temperature is 50-85 °C.

The invention also provides a protective glove for electric welding prepared by the method.

The protective gloves for electric welding and the preparation method thereof have the following advantages:
The protective gloves for electric welding prepared by the invention adopt flame-retardant graphene polyester and have better flame-retardant property. However, after finishing with flame-retardant agent, the flame-retardant effect is better. The obtained gloves have a high limiting oxygen index, which has a good protective effect on high temperature, metal sputtering and droplet caused by electric welding, so it is more suitable for electric welding and other fields, and can effectively protect human safety.

The protective gloves for electric welding prepared by the method have the advantages of simple process, low cost and high economic benefit, and are suitable for large-scale industrial production.

### Detailed description of the embodiments

The specific content of the invention are further explained below.

The invention provides a preparation method of protective gloves for electric welding, which comprises: step 1, selecting raw materials; Step 2: Prepare refined terephthalic acid/graphene oxide/ethylene glycol modified paste; Step 3, esterification reaction: Add the slurry obtained in step 2 to the reactor, fill and discharge nitrogen repeatedly, exhaust the air in the reactor, and finally heat up after filling nitrogen to carry out pressurized esterification reaction; Step 4, polycondensation reaction: continue to increase the temperature in the kettle, carry out low vacuum polycondensation, reduce the pressure in the kettle, and at the same time increase the temperature. After the reaction, let it stand, then open the casting head, fill the nitrogen into the polymer melt to form a stable trickle, cool it by the sink, cut the grain by the granulator, and dry it with air blast, and save it for later use. Step 5, melt spinning: the modified graphene flame retardant polyester masterbatch obtained in step 4 is dried, then heated and melted, filtered through the spinning box and spun into bundles; Step 6, prepare fabric: through the weaving process, the graphene flame retardant polyester filament obtained in step 5 is woven into woven fabric; Step 7, post-treatment of the fabric: prepare a flame retardant finishing liquid, stir and heat up, and then immerse the fabric in the finishing liquid, and then through the dip roller, extruding to remove the excess finishing liquid, and then use the dryer to dry, to obtain high flame retardant fabric; Step 8, according to the glove template, the fabric obtained in step 7 is cut and stitched to make protective gloves for electric welding.

Preferably, the raw materials in step 1 consist, by mass percentage, of 58% to 85% of PTA (pure terephthalic acid), 10% to 40% of ethylene glycol (EG, ethylene glycol), and graphene oxide (GO, grapheneoxide) 0.1%-10%, flame retardant 0.1%-10%, modifier 0.1 %∼1%.

Graphene oxide is prepared by any of the methods of mechanical stripping, chemical vapor deposition and REDOX. The flame retardant is prepared by using diammonium hydrogen phosphate, antimony titanium complex and antimony trioxide evenly mixed according to mass ratio 1: (1-2) : (2-3); The modifier is made of polyvinyl alcohol, polyethylene glycol and silane coupling agent uniformly mixed according to mass ratio 1: (2-3) : (3-4).

In the step 2, ethylene glycol was slowly added to the graphene oxide and flame retardant, while the modifier and refined terephthalic acid were added to the slurry, and the temperature was raised to 70 ~ 85 °C after mixing evenly, and the modified dispersion solution was obtained after treatment for 30 ~ 50min. The molar ratio of refined terephthalic acid to ethylene glycol is 1:1 to 4.

In the step 3, the resulting slurry is added to the polymerization reactor, repeated filling and discharging nitrogen for several times to exhaust the air in the reactor, and then filling nitrogen until the pressure in the reactor is 0.1-0.5 MPa, and then slowly heating up to the temperature range of 230-260 °C for pressurized esterification.

In the step 4, continue to increase the temperature in the kettle to 225 ~ 265°C, carry out low vacuum condensation, slowly reduce the pressure in the kettle from normal pressure to 100 ~ 500Pa, while slowly increase the temperature to 270 ~ 290°C, control the reaction time to 60 ~ 90min, and then stand for 15 ~ 30min, open the casting head.

In the Step 5, the obtained modified graphene flame retardant polyester masterbatch was dried, the drying temperature was controlled within the range of 80-200°C, and the water content of the masterbatch was less than 100 ppm after drying; Then the mixture is added to the screw extruder to heat and melt, and then spun into a bundle after filtering through the spinning box. The spinning temperature is 270-290°C, and the spinning speed is 500-1500 m/min. The modified graphene anti-cutting polyester fiber was obtained.

In the step 6, the gram weight of the woven fabric obtained is 100-500 g /m².

In the step 7, the preparation of flame retardant finishing liquid is by selecting the same flame retardant components, evenly dispersed in distilled water, and then fully stirred, heating to 50-80°C, the mass concentration of flame retardant in the finishing liquid is 10-30%; Then the fabric is immersed in the finishing liquid, fully impregnated through the dipping roller, extruded to remove the excess finishing liquid, and then dried by the dryer, the drying temperature is 50-85°C.

The equipment and other process condition parameters used in the invention are known to the technical personnel in the field.

The invention also provides a protective glove for electric welding prepared by the method.

The protective gloves for electric welding provided by the invention and the preparation method thereof are further described in combination with embodiments.

### Embodiment 1 :

The invention discloses a method for preparing protective gloves for electric welding, which comprises:
Step 1: Select the ingredients.

Preferably, the raw material consists of 85% PTA, 10% ethylene glycol, 0.1% graphene oxide, 4.8% flame retardant, and 0.1% modifier by mass percentage. Graphene oxide is prepared by mechanical stripping.

The flame retardant was prepared by mixing diammonium hydrogen phosphate, antimony titanium complex and antimony trioxide according to mass ratio 1:1:2. The modifier was prepared by mixing polyvinyl alcohol, polyethylene glycol and silane coupling agent according to the mass ratio of 1:2:3.

Step 2: Prepare the modified PTA/GO/EG slurry.

Ethylene glycol was slowly added to the graphene oxide and flame retardant, and the modifier and PTA were added to the slurry. After mixing evenly, the temperature was raised to 70-85 °C and treated for 30-50 min to obtain the modified PTA/GO/EG dispersion solution. The mole ratio of PTA and EG is 1:1 ~ 4.

Step 3, esterification reaction: Add the slurry obtained in step 2 to the polymerization reactor, repeat filling and discharging nitrogen for several times, exhaust the air in the reactor, and then fill nitrogen until the pressure in the reactor is 0.1-0.5 MPa, and then slowly heat up to the temperature range of 230-260°C for pressurized esterification reaction.

Step 4, polycondensation reaction: Continue to increase the temperature in the kettle to 225 - 265 °C, carry out low vacuum condensation, slowly reduce the pressure in the kettle from normal pressure to 100 - 500 Pa, while slowly increase the temperature to 270 - 290 °C, control the reaction time to 60 - 90 min, then stand for 15 - 30 min, open the casting head, fill nitrogen into the polymer melt to form a stable trickle. After being cooled by sink, cut by grain cutter and dried by air blast, store for later use.

Step 5, melt spinning: the modified graphene flame retardant polyester masterbatch obtained in step 4 is dried, the drying temperature is controlled within the range of 80-200 °C, and the water content of the masterbatch is less than 100 ppm after drying; Then the mixture is added to the screw extruder to heat and melt, and then spun into a bundle after filtering through the spinning box. The spinning temperature is 270-290 °C, and the spinning speed is 500-1500 m/min. The modified graphene anti-cutting polyester fiber was obtained.

Step 6, Prepare the fabric: by weaving, the graphene flame retardant polyester filament obtained in step 5 is woven into woven fabric. The gram weight of the woven fabric is 100-500 g/m².

Step 7, post-treatment of the fabric: the preparation of flame retardant finishing liquid is by selecting the same flame retardant components, evenly dispersed in distilled water, and then fully stirred, heating to 50-80 °C, the mass concentration of flame retardant in the finishing liquid is 10-30%; Then the fabric is immersed in the finishing liquid, fully impregnated through the dipping roller, extruded to remove the excess finishing liquid, and then dried by the dryer, the drying temperature is 50-85 °C, to obtain high flame retardant fabric.

Step 8, according to the glove template, the fabric obtained in step 7 is cut and stitched to make protective gloves for electric welding.

The embodiment also provides a protective glove for electric welding prepared by the method.

### Embodiment 2 :

The invention discloses a method for preparing protective gloves for electric welding, which comprises:
Step 1: Select the ingredients.

Preferably, the raw material consists of PTA 58.4%, ethylene glycol 40%, graphene oxide 1%, flame retardant 0.1%, and modifier 0.5% by mass percentage. Graphene oxide is prepared by chemical vapor deposition.

The flame retardant was prepared by mixing diammonium hydrogen phosphate, antimony titanium complex and antimony trioxide according to mass ratio 1:2:2. The modifier was prepared by mixing polyvinyl alcohol, polyethylene glycol and silane coupling agent according to mass ratio 1:2:4.

Step 2: Prepare the modified PTA/GO/EG slurry.

Ethylene glycol was slowly added to the graphene oxide and flame retardant, and the modifier and PTA were added to the slurry. After mixing evenly, the temperature was raised to 70-85 °C and treated for 30-50 min to obtain the modified PTA/GO/EG dispersion solution. The mole ratio of PTA and EG is 1:1 ~ 4.

Step 3, esterification reaction: Add the slurry obtained in step 2 to the polymerization reactor, repeat filling and discharging nitrogen for several times, exhaust the air in the reactor, and then fill nitrogen until the pressure in the reactor is 0.1-0.5 MPa, and then slowly heat up to the temperature range of 230-260 °C for pressurized esterification reaction.

Step 4, polycondensation reaction: Continue to increase the temperature in the kettle to 225 - 265 °C, carry out low vacuum condensation, slowly reduce the pressure in the kettle from normal pressure to 100 - 500 Pa, while slowly increase the temperature to 270 - 290 °C, control the reaction time to 60 - 90 min, then stand for 15 - 30 min, open the casting head, fill nitrogen into the polymer melt to form a stable trickle. After being cooled by sink, cut by grain cutter and dried by air blast, store for later use.

Step 5, melt spinning: the modified graphene flame retardant polyester masterbatch obtained in step 4 is dried, the drying temperature is controlled within the range of 80-200 °C, and the water content of the masterbatch is less than 100 ppm after drying; Then the mixture is added to the screw extruder to heat and melt, and then spun into a bundle after filtering through the spinning box. The spinning temperature is 270-290 °C, and the spinning speed is 500-1500 m/min. The modified graphene anti-cutting polyester fiber was obtained.

Step 6, Prepare the fabric: by weaving, the graphene flame retardant polyester filament obtained in step 5 is woven into woven fabric. The gram weight of the woven fabric is 100-500 g/m².

Step 7, post-treatment of the fabric: the preparation of flame retardant finishing liquid is by selecting the same flame retardant components, evenly dispersed in distilled water, and then fully stirred, heating to 50-80 °C, the mass concentration of flame retardant in the finishing liquid is 10-30 %; Then the fabric is immersed in the finishing liquid, fully impregnated through the dipping roller, extruded to remove the excess finishing liquid, and then dried by the dryer, the drying temperature is 50-85 °C, to obtain high flame retardant fabric.

Step 8, according to the glove template, the fabric obtained in step 7 is cut and stitched to make protective gloves for electric welding.

The embodiment also provides a protective glove for electric welding prepared by the method.

### Embodiment 3 :

The invention discloses a method for preparing protective gloves for electric welding, which comprises:
Step 1: Select the ingredients.

Preferably, the raw material consists of 64.8% PTA, 25% ethylene glycol, 5 % graphene oxide, 5 % flame retardant and 0.2 % modifier by mass percentage. Graphene oxide is prepared by the REDOX process.

The flame retardant was prepared by mixing diammonium hydrogen phosphate, antimony titanium complex and antimony trioxide according to mass ratio 1:1:3. The modifier was prepared by mixing polyvinyl alcohol, polyethylene glycol and silane coupling agent according to the mass ratio of 1:3:3.

Step 2: Prepare the modified PTA/GO/EG slurry.

Ethylene glycol was slowly added to the graphene oxide and flame retardant, and the modifier and PTA were added to the slurry. After mixing evenly, the temperature was raised to 70-85 °C and treated for 30-50 min to obtain the modified PTA/GO/EG dispersion solution. The mole ratio of PTA and EG is 1:1 ~ 4.

Step 3, esterification reaction: Add the slurry obtained in step 2 to the polymerization reactor, repeat filling and discharging nitrogen for several times, exhaust the air in the reactor, and then fill nitrogen until the pressure in the reactor is 0.1-0.5 MPa, and then slowly heat up to the temperature range of 230-260 °C for pressurized esterification reaction.

Step 4, polycondensation reaction: Continue to increase the temperature in the kettle to 225 - 265 °C, carry out low vacuum condensation, slowly reduce the pressure in the kettle from normal pressure to 100 - 500 Pa, while slowly increase the temperature to 270 - 290 °C, control the reaction time to 60 - 90 min, then stand for 15 - 30 min, open the casting head, fill nitrogen into the polymer melt to form a stable trickle. After being cooled by sink, cut by grain cutter and dried by air blast, store for later use.

Step 5, melt spinning: the modified graphene flame retardant polyester masterbatch obtained in step 4 is dried, the drying temperature is controlled within the range of 80-200 °C, and the water content of the masterbatch is less than 100 ppm after drying; Then the mixture is added to the screw extruder to heat and melt, and then spun into a bundle after filtering through the spinning box. The spinning temperature is 270-290 °C, and the spinning speed is 500-1500 m/min. The modified graphene anti-cutting polyester fiber was obtained.

Step 6, Prepare the fabric: by weaving, the graphene flame retardant polyester filament obtained in step 5 is woven into woven fabric. The gram weight of the woven fabric is 100-500 g/m².

Step 7, post-treatment of the fabric: the preparation of flame retardant finishing liquid is by selecting the same flame retardant components, evenly dispersed in distilled water, and then fully stirred, heating to 50-80°C, the mass concentration of flame retardant in the finishing liquid is 10-30%; Then the fabric is immersed in the finishing liquid, fully impregnated through the dipping roller, extruded to remove the excess finishing liquid, and then dried by the dryer, the drying temperature is 50-85°C, to obtain high flame retardant fabric.

Step 8, according to the glove template, the fabric obtained in step 7 is cut and stitched to make protective gloves for electric welding.

The embodiment also provides a protective glove for electric welding prepared by the method.

### Embodiment 4 :

The invention discloses a method for preparing protective gloves for electric welding, which comprises:
Step 1: Select the ingredients.

Preferably, the raw material consists of 60.2% PTA, 30% ethylene glycol, 8% graphene oxide, 1% flame retardant, and 0.8% modifier by mass percentage. Graphene oxide is prepared by mechanical stripping or chemical vapor deposition. The flame retardant was prepared by mixing diammonium hydrogen phosphate, antimony titanium complex and antimony trioxide according to mass ratio 1:2:3. The modifier was prepared by mixing polyvinyl alcohol, polyethylene glycol and silane coupling agent according to mass ratio 1:3:4.

Step 2: Prepare the modified PTA/GO/EG slurry.

Ethylene glycol was slowly added to the graphene oxide and flame retardant, and the modifier and PTA were added to the slurry. After mixing evenly, the temperature was raised to 70-85 °C and treated for 30-50 min to obtain the modified PTA/GO/EG dispersion solution. The mole ratio of PTA and EG is 1:1 ~ 4.

Step 3, esterification reaction: Add the slurry obtained in step 2 to the polymerization reactor, repeat filling and discharging nitrogen for several times, exhaust the air in the reactor, and then fill nitrogen until the pressure in the reactor is 0.1-0.5 MPa, and then slowly heat up to the temperature range of 230-260 °C for pressurized esterification reaction.

Step 4, polycondensation reaction: Continue to increase the temperature in the kettle to 225 - 265 °C, carry out low vacuum condensation, slowly reduce the pressure in the kettle from normal pressure to 100 - 500 Pa, while slowly increase the temperature to 270 - 290 °C, control the reaction time to 60 - 90 min, then stand for 15 - 30 min, open the casting head, fill nitrogen into the polymer melt to form a stable trickle. After being cooled by sink, cut by grain cutter and dried by air blast, store for later use.

Step 5, melt spinning: the modified graphene flame retardant polyester masterbatch obtained in step 4 is dried, the drying temperature is controlled within the range of 80-200 °C, and the water content of the masterbatch is less than 100ppm after drying; Then the mixture is added to the screw extruder to heat and melt, and then spun into a bundle after filtering through the spinning box. The spinning temperature is 270-290 °C, and the spinning speed is 500-1500 m/min. The modified graphene anti-cutting polyester fiber was obtained.

Step 6, Prepare the fabric: by weaving, the graphene flame retardant polyester filament obtained in step 5 is woven into woven fabric. The gram weight of the woven fabric is 100-500 g/m².

Step 7, post-treatment of the fabric: the preparation of flame retardant finishing liquid is by selecting the same flame retardant components, evenly dispersed in distilled water, and then fully stirred, heating to 50-80 °C, the mass concentration of flame retardant in the finishing liquid is 10-30 %; Then the fabric is immersed in the finishing liquid, fully impregnated through the dipping roller, extruded to remove the excess finishing liquid, and then dried by the dryer, the drying temperature is 50-85 °C, to obtain high flame retardant fabric.

Step 8, according to the glove template, the fabric obtained in step 7 is cut and stitched to make protective gloves for electric welding.

The embodiment also provides a protective glove for electric welding prepared by the method.

### Embodiment 5 :

The invention discloses a method for preparing protective gloves for electric welding, which comprises:
Step 1: Select the ingredients.

Preferably, the raw material consists of PTA 58%, ethylene glycol 21 %, graphene oxide 10 %, flame retardants 10 %, and modifiers 1 % by mass percentage. Graphene oxide is prepared by chemical vapor deposition or REDOX process.

The flame retardant is prepared by mixing diammonium hydrogen phosphate, antimony titanium complex and antimony trioxide according to mass ratio 1:1:5:2.5. The modifier was prepared by mixing polyvinyl alcohol, polyethylene glycol and silane coupling agent according to mass ratio 1:2.5:3.5.

Step 2: Prepare the modified PTA/GO/EG slurry.

Ethylene glycol was slowly added to the graphene oxide and flame retardant, and the modifier and PTA were added to the slurry. After mixing evenly, the temperature was raised to 70-85 °C and treated for 30-50 min to obtain the modified PTA/GO/EG dispersion solution. The mole ratio of PTA and EG is 1:1 ~ 4.

Step 3, esterification reaction: Add the slurry obtained in step 2 to the polymerization reactor, repeat filling and discharging nitrogen for several times, exhaust the air in the reactor, and then fill nitrogen until the pressure in the reactor is 0.1-0.5 MPa, and then slowly heat up to the temperature range of 230-260 °C for pressurized esterification reaction.

Step 4, polycondensation reaction: Continue to increase the temperature in the kettle to 225 - 265 °C, carry out low vacuum condensation, slowly reduce the pressure in the kettle from normal pressure to 100 - 500 Pa, while slowly increase the temperature to 270 - 290 °C, control the reaction time to 60 - 90 min, then stand for 15 - 30 min, open the casting head, fill nitrogen into the polymer melt to form a stable trickle. After being cooled by sink, cut by grain cutter and dried by air blast, store for later use.

Step 5, melt spinning: the modified graphene flame retardant polyester masterbatch obtained in step 4 is dried, the drying temperature is controlled within the range of 80-200 °C, and the water content of the masterbatch is less than 100 ppm after drying; Then the mixture is added to the screw extruder to heat and melt, and then spun into a bundle after filtering through the spinning box. The spinning temperature is 270-290 °C, and the spinning speed is 500-1500m/min. The modified graphene anti-cutting polyester fiber was obtained.

Step 6, Prepare the fabric: by weaving, the graphene flame retardant polyester filament obtained in step 5 is woven into woven fabric. The gram weight of the woven fabric is 100-500 g/m².

Step 7, post-treatment of the fabric: the preparation of flame retardant finishing liquid is by selecting the same flame retardant components, evenly dispersed in distilled water, and then fully stirred, heating to 50-80 °C, the mass concentration of flame retardant in the finishing liquid is 10-30 %; Then the fabric is immersed in the finishing liquid, fully impregnated through the dipping roller, extruded to remove the excess finishing liquid, and then dried by the dryer, the drying temperature is 50-85 °C, to obtain high flame retardant fabric.

Step 8, according to the glove template, the fabric obtained in step 7 is cut and stitched to make protective gloves for electric welding.

The embodiment also provides a protective glove for electric welding prepared by the method.

The protective gloves for electric welding prepared by each embodiment of the invention are tested, and the results are shown in Table 1 below.

**Table 1. Test results table**

| NO. | Graphene Oxide Content wt% | Modifier type | Limiting oxygen index |
|---|---|---|---|
| Embodiment 1 | 0.1 | Polyvinyl alcohol: polyethylene glycol: silane coupling agent = 1:2:3 | 38 |
| Embodiment 2 | 1 | Polyvinyl alcohol: polyethylene glycol: silane coupling agent = 1:2:4 | 45 |
| Embodiment 3 | 5 | Polyvinyl alcohol: polyethylene glycol: silane coupling agent =1:3:3 | 43 |
| Embodiment 4 | 8 | Polyvinyl alcohol: polyethylene glycol: silane coupling agent=1: 3: 4 | 41 |
| Embodiment 5 | 10 | Polyvinyl alcohol: polyethylene glycol: silane coupling agent=1: 2.5: 3.5 | 40 |

The protective gloves for electric welding and the preparation method thereof are designed to use the modified graphene oxide preparation and dispersion system and the polyester in situ polymerization technology to preferentially prepare one kind of graphene flame retardant polyester fiber for electric welding, and then prepare one kind of flame retardant polyester fabric by weaving process, and then obtain high flame retardant fabric by flame retardant post-treatment. Finally, the glove product is made by stitching process. The glove has a high limiting oxygen index, which has a good protection against high temperature generated by electric welding, metal sputtering and melting drops, etc., and the synergistic flame retardant effect of graphene makes the fabric have a lasting flame retardant effect.

Although the contents of the invention have been described in detail by the above preferred embodiments, it should be recognized that the above description should not be considered a limitation of the invention. After a person skilled in the art has read the above, various modifications and alternatives to the present invention will be apparent. Therefore, the scope of protection of the invention shall be limited by the attached claims.

## Claims

1. A method for preparing a welding protective glove, wherein the method comprises:
Step 1, selection of raw materials;
Step 2, preparation of a refined terephthalic acid/graphene oxide/ethylene glycol modified slurry;
Step 3, esterification reaction: the slurry obtained in step 2 is added to a reactor, with repeated filling and emptying of nitrogen gas, air in the reactor is exhausted, and then nitrogen gas is filled and the temperature is raised to perform a pressurized esterification reaction;
Step 4, condensation reaction: the temperature in the reactor is continued to be raised to perform a low vacuum condensation, the pressure in the reactor is reduced, and the temperature is raised at the same time, the reaction is then allowed to stand, the cast head is opened, nitrogen gas is filled until the polymer melt forms a stable fine stream, the polymer melt is cooled by a water tank, cut into granules by a granulator, and dried by a fan dryer, and then stored for use;
Step 5, melt spinning: the modified graphene oxide flame-retardant polyester masterbatch obtained in step 4 is dried, then heated and melted, and then spun into filaments through a spinning box filter;
Step 6, fabric preparation: the graphene oxide flame-retardant polyester filament obtained in step 5 is woven into a woven fabric through a shuttle loom;
Step 7, post-treatment of the fabric: a flame-retardant finishing liquid is prepared, stirred, and then heated, and then the fabric is immersed in the finishing liquid, then passed through an immersion calender to squeeze out excess finishing liquid, and then dried by a dryer to obtain a high-flame-retardant fabric. Step 8, using the glove template, cut and sew the fabric obtained in step 7 to produce welding protective gloves.

2. The preparation method of protective gloves for electric welding according to claim 1, wherein the raw materials in step 1 consist, by mass percentage, of refined terephthalic acid 58% to 85%, ethylene glycol 10% to 40%, graphene oxide 0.1% to 10%, flame retardants 0.1% to 10%, and modifiers 0.1% to 1%.

3. The preparation method of protective gloves for electric welding according to claim 2, wherein the graphene oxide is prepared by any of the methods of mechanical stripping, chemical vapor deposition and REDOX method; The flame retardant is prepared by using diammonium hydrogen phosphate, antimony titanium complex and antimony trioxide evenly mixed according to mass ratio 1: (1-2) : (2-3); The modifier is made of polyvinyl alcohol, polyethylene glycol and silane coupling agent uniformly mixed according to mass ratio 1: (2-3) : (3-4).

4. The preparation method of protective gloves for electric welding according to claim 1, wherein in the step 2, ethylene glycol is slowly added to graphene oxide and flame retardant, while the modifier and refined terephthalic acid are added to the slurry, the temperature is raised to 70 ~ 85°C after mixing evenly, and the modified dispersion solution is obtained after treatment for 30 ~ 50 min; The molar ratio of refined terephthalic acid to ethylene glycol is 1:1 to 4.

5. The preparation method of protective gloves for electric welding according to claim 1, wherein in the step 3, the resulting slurry is added to the polymerization reactor, repeated filling and discharging nitrogen several times, exhaust the air in the reactor, and then filling nitrogen to the internal pressure of the reactor is 0.1 ~ 0.5 MPa, and then slowly heating up to the temperature range of 230-260 °C. Pressure esterification is performed.

6. The preparation method of protective gloves for electric welding according to claim 1, wherein in the step 4, the temperature in the reactor is continued to rise to 225 ~ 265 °C, low vacuum condensation is carried out, the pressure in the reactor is slowly reduced from normal pressure to 100 ~ 500 Pa, while the temperature is slowly increased to 270 ~ 290 °C, and the reaction time is controlled to 60 ~ 90 min. Then let it stand for 15 to 30 minutes and open the casting head.

7. The preparation method of protective gloves for electric welding according to claim 1, wherein in the step 5, by the drying of the obtained modified graphene flame retardant polyester masterbatch , the drying temperature is controlled within the range of 80-200 °C, and the water content of the masterbatch after drying is less than 100 ppm; Then the mixture is added to the screw extruder to heat and melt, and then spun into a bundle after filtering through the spinning box. The spinning temperature is 270-290°C, and the spinning speed is 500-1500 m/min. The modified graphene anti-cutting polyester fiber was obtained.

8. The preparation method of protective gloves for electric welding according to claim 1, wherein in the step 6, the gram weight of woven fabric obtained is 100-500 g /m².

9. The preparation method of protective gloves for electric welding according to claim 1, wherein in the step 7, the preparation of flame retardant finishing liquid is by selecting the same flame retardant component in addition, evenly dispersed in distilled water, and then fully stirred, heating to 50-80 °C, and the mass concentration of flame retardant in the finishing liquid is 10-30 %; Then the fabric is immersed in the finishing liquid, fully impregnated through the dipping roller, extruded to remove the excess finishing liquid, and then dried by the dryer, the drying temperature is 50-85 °C.

10. A protective glove for electric welding prepared by the method according to any one of claims 1 to 9.
